# EUROPEAN PATENT APPLICATION

(11) **EP 4 733 661 A2**
(43) Date of publication of application: **29.04.2026**
(21) Application number: 25210402.1
(22) Date of filing: 22.10.2025
(51) Int. Cl.: F21L 4/00, F21V 15/01, F21V 23/00

(54) **LIGHTING DEVICE**

(30) Priority: 23.10.2024 US 202463710944 P
(71) Applicant: Techtronic Cordless GP, Anderson, SC 29621 (US)
(72) Inventor: BUCK, William C., Anderson, 29621 (US); DUNSTON, Jarrett, Anderson, 29621 (US); WONG, Tsz Kin, Kwai Chung (HK); MOK, Kwok Ting, Kwai Chung (HK)
(74) Representative: Meissner Bolte Partnerschaft mbB

(57) **Abstract**

A lighting device includes a housing, a light module, and a battery pack. The housing is formed from a flexible material and extends along a longitudinal axis between a front end and a rear end. The housing includes an interior space extending along the longitudinal axis, a front opening positioned adjacent the front end providing access to the interior space, and a side opening positioned between the front end and the rear end providing access to the interior space. The light module is disposed within the housing adjacent the front end such that a light source of the light module emits light through the front opening. The battery pack is disposed within the housing and removably coupled to the light module to provide power to the light source. The battery pack includes a surface that is visible through the side opening during operation of the lighting device.

## Description

### CROSS-REFERENCE TO RELATED APPLICATIONS

This application claims priority to U.S. Provisional Patent Application No. 63/710,944, filed on October 23, 2024, the entire contents of which are incorporated herein by reference.

### FIELD

Embodiments described herein relate to portable lighting devices, such as flashlights, and especially to portable lighting devices including removable, rechargeable battery packs.

### SUMMARY

Embodiments described herein provide systems and methods directed to a lighting device including a housing, a light module, and a battery pack. The lighting device includes a housing formed from a flexible material and extending along a longitudinal axis between a front end and a rear end. The housing includes an interior space extending along the longitudinal axis, a front opening positioned adjacent the front end and providing access to the interior space, and a side opening positioned between the front end and the rear end and providing access to the interior space. The lighting device also includes a light module disposed within the housing adjacent the front end such that a light source of the light module is configured to emit light through the front opening. The lighting device further includes a battery pack disposed within the housing and removably coupled to the light module to provide power to the light source, the battery pack including a surface that is visible through the side opening during operation of the lighting device.

In some embodiments, the battery pack includes a first end including an interface for providing power to the light module and a second end opposite the first end, and the surface extends between the first end and the second end.

In some embodiments, the interface is a first interface, the battery pack further includes a second interface, and the second interface is positioned adjacent the surface at the first end of the battery pack.

In some embodiments, the second interface is accessible while the battery pack is positioned within the interior space, and the second interface is couplable to a power supply to recharge the battery pack.

In some embodiments, the housing includes a port opening adjacent the side opening that selectively provides access to the interior space, and the battery pack is supported in the housing with the second interface adjacent the port opening.

In some embodiments, the surface extends along the longitudinal axis.

In some embodiments, the light module includes one or more electrical contacts, and the housing supports the light module adjacent the battery pack such that the one or more electrical contacts engage an interface of the battery pack, the interface includes one or more terminals.

In some embodiments, the battery pack is removable from the housing through the side opening and independently of the light module.

In some embodiments, the light module is removable from the housing independently from the battery pack.

In some embodiments, the light module includes a locating feature, the battery pack includes an alignment feature, and the alignment feature engages the locating feature to facilitate electrical connection of the light module to the battery pack.

In some embodiments, the techniques described herein relate to a lighting device including a housing formed from a flexible material. The housing includes an interior space and an opening providing access to the interior space. The lighting device also includes a light module at least partially received by the housing and including a power interface and a light source configured to emit light, the light source electrically connected to the power interface. The lighting device includes a battery pack received within the interior space of the housing adjacent the opening, the battery pack including a battery interface. The housing applies a retaining force that biases the battery pack into engagement with the light module such that the battery interface is electrically connected to the power interface. The battery pack provides power to the light source.

In some embodiments, the housing includes a loop configured to be engaged by a user to stretch the housing.

In some embodiments, the battery pack includes a charging port, and the charging port is accessible through the housing when the battery pack is disposed within the interior space of the housing.

In some embodiments, the opening is a side opening positioned between a first end and a second end of the housing, and the charging port is accessible through the side opening.

In some embodiments, the battery pack is removable from the housing through the side opening.

In some embodiments, the housing includes a port opening positioned between a first end and a second end of the housing, the port opening includes a flap that provides selective access to the interior space, and the charging port is accessible through the port opening.

In some embodiments, the light module and the battery pack are removable from the housing independent of each other.

In some embodiments, the techniques described herein relate to a case for a battery powered device, the case including a housing formed from a flexible material and biased to return to an initial position. The case also includes an interior space defined within the housing, the interior space configured to at least partially receive a device module of the battery powered device, the interior space further configured to receive a battery pack with a battery interface. The case includes an opening providing access to the interior space. The housing is configured to stretch to expand the opening and allow the battery pack to be positioned in the interior space. A bias of the housing returning to the initial position applies a retaining force configured to hold the battery pack in the interior space and electrically couple the battery interface with the power interface to provide power from the battery pack to the device module.

In some embodiments, the case further includes a loop configured to be engaged by a user to stretch the housing against the bias.

In some embodiments, the housing includes a first end having an opening and a second end opposite the first end, the interior space is configured to receive the device module at the first end adjacent the opening, and the loop is coupled to the second end.

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

Other aspects of the embodiments will become apparent by consideration of the detailed description and accompanying drawings.

### BRIEF DESCRIPTION OF THE DRAWINGS

FIG. 1 is a front perspective view of one embodiment of a lighting device including a flashlight with a battery pack, a light module, and a housing.
FIG. 2 is a front perspective view the battery pack of the flashlight of FIG. 1.
FIG. 3 is a rear perspective view of the battery pack of the flashlight of FIG. 1.
FIG. 4 is an exploded view of the light module of the flashlight of FIG. 1.
FIG. 5 is a rear perspective view of the light module of the flashlight of FIG. 1.
FIG. 6 is a cross-sectional view of the housing of the flashlight of FIG. 1.
FIG. 7 is an exploded view of the flashlight of FIG. 1.
FIG. 8 illustrates the flashlight of FIG. 1 gripped by a user.
FIG. 9 illustrates the flashlight of FIG. 1 clipped to a backpack.
FIG. 10 illustrates a second embodiment of a lighting device including a flashlight.
FIG. 11A illustrates one embodiment of a battery powered device with a flexible housing including an elastic band light.
FIG. 11B illustrates one embodiment of a battery powered device with a flexible housing including a headlamp.
FIG. 11C illustrates one embodiment of a battery powered device with a flexible housing including a pet collar.
FIG. 11D illustrates one embodiment of a battery powered device with a flexible housing including a panel light.
FIG. 11E illustrates one embodiment of a battery powered device with a flexible housing including a bike light.
FIG. 11F illustrates one embodiment of a battery powered device with a flexible housing including a battery charger.

### DETAILED DESCRIPTION

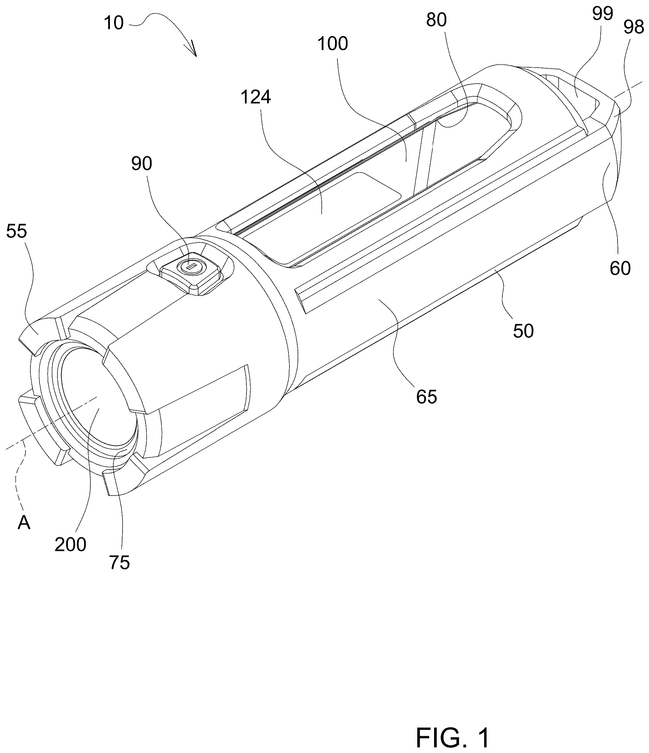

FIGS. 1-9 illustrate a portable device. The portable device may also be referred to as a battery powered device. In the illustrated embodiment, the portable device is a flashlight 10, or portable lighting device, configured to be supported by a user to emit light in a desired direction. The flashlight 10 includes a battery pack 100 and a light module 200 supported in a flexible housing 50. Although the illustrated portable device is a flashlight, in other embodiments, the portable device may be a different type of device, such as a fan, a laser pointer, a speaker, a battery charger, and the like.

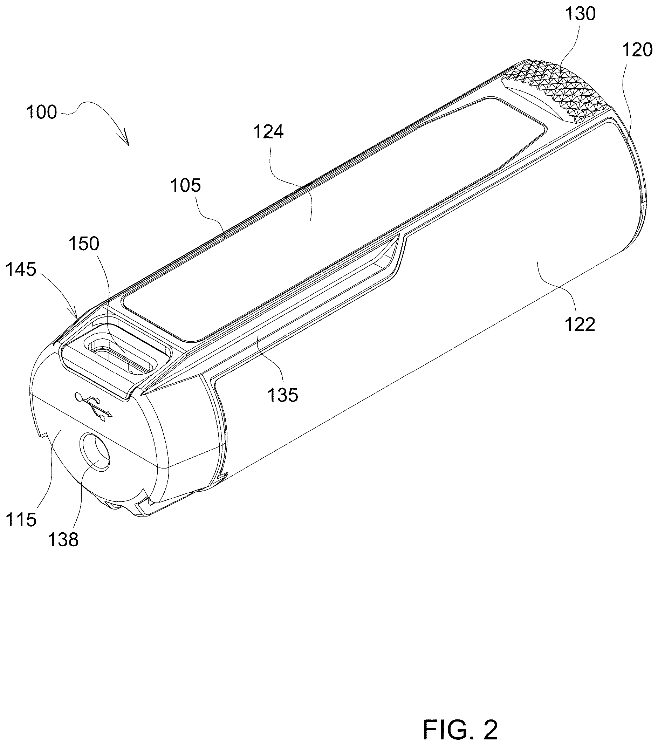

With reference to FIGS. 2-3, the battery pack 100 is a compact battery pack that is generally used to provide power to an attached device. In some embodiments, the battery pack 100 may be similar to the battery pack of U.S. Patent Application Publication No. 2024/0186602, filed December 5, 2022, the entire contents of which are incorporated herein by reference. In some embodiments, the battery pack 100 may be any Li-Ion battery pack. In some embodiments, the battery pack 100 may include an alkaline battery, such as a standard AA battery. The battery pack 100 may include a housing 105 that, when disposed in the flexible housing 50 extends along the axis A between a first end face 115 and a second end face 120. The first end face 115 and the second end face 120 may be generally circular. The housing 105 includes a first surface 122 extending between the first end face 115 and second end face 120, and a second surface 124 extending between the first end face 115 and second end face 120. The first surface 122 may have a curved profile or semi-cylindrical shape. The second surface 124 may be generally flattened. In the illustrated embodiment, the first surface 122 and second surface 124 meet at two edges and surround the battery pack 100. In other embodiments, the housing 105 may include additional surfaces or additional edges extending between the first end face 115 and the second end face 120. The battery pack 100 is designed to be removable and rechargeable. In some embodiments, the battery pack 100 may be a lithium-ion battery pack. The battery pack 100 includes internal power components, such as one or more power cells capable of storing and providing power, a controller capable of controlling the supply of power, that are not discussed further herein.

With reference to FIGS. 2-3, the battery pack 100 includes a first interface 140 and a second interface 145 positioned on opposite sides of the battery pack 100 adjacent the first end face 115. Each interface 140, 145 is configured for electrical communication. The second interface 145 may include a port 150 configured to couple to standard cables. In one example, the port 150 may be a DC input/output. In the illustrated example, the port 150 is a USB-C port. In some embodiments, the port 150 may be USB, USB-PD, or other types of ports. The second interface 145 may be used to provide power to an external device (e.g., a mobile phone, etc.) or may be used to charge the battery pack 100. As such, the port may also be referred to as a charging port. The second interface 145 is positioned adjacent the second surface 124 and is generally perpendicular to the first end face 115. The second interface 145 may be couplable to a power supply.

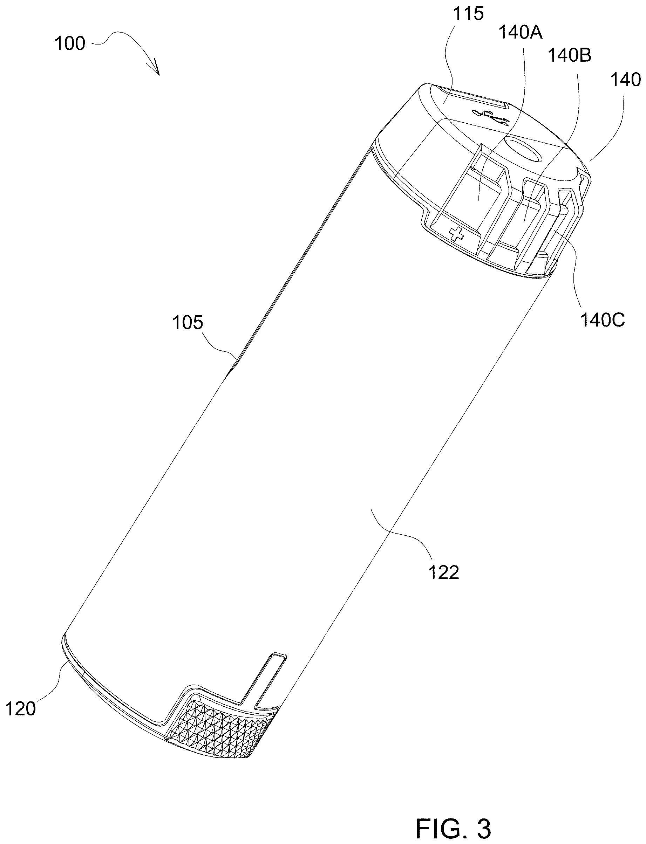

With reference to FIG. 3, the first interface 140 includes electrical contacts or terminals configured to provide power to an attached device. The battery pack 100 may include three terminals 140A, 140B, 140C for providing an electrical connection between the internal power components of the battery pack 100 and the attached device, such as the light module 200. The three terminals 140A, 140B, 140C may include a positive terminal 140A, a neutral terminal 140B, and a negative terminal 140C. In some embodiments, more or less than three terminals 140A, 140B, 140C may be provided and may have different charge associations. As illustrated, the terminals 140A, 140B, 140C are positioned adjacent the first end face 115 and on or adjacent to the first surface 122. The first interface 140 is therefore opposite the second interface 145. In some embodiments, only some of the terminals 140A, 140B, 140C are engageable by the attached device.

As illustrated in FIG. 2, the battery pack 100 may include alignment features such as a bumper 130 at the second end of the flat surface 124, guides 135 provided at a connection point between the curved surface 122 and the flat surface 124, and a first indentation 138 provided on the first end face 115. Some devices may include corresponding features that engage the alignment features to align the battery pack 100 to aid electrically connecting to the device. In some embodiments, the non-circular shape of the housing 105 formed by the curved surface 122 and flat surface 124 may also act as an alignment feature.

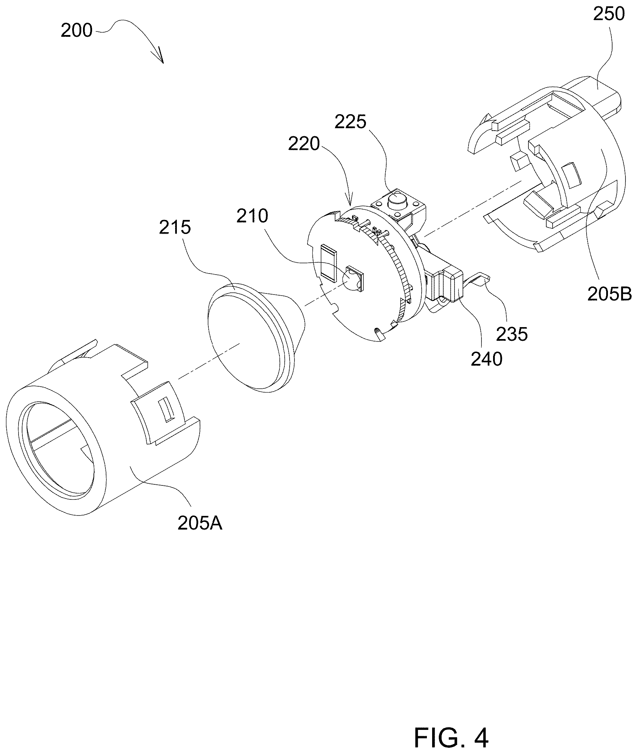

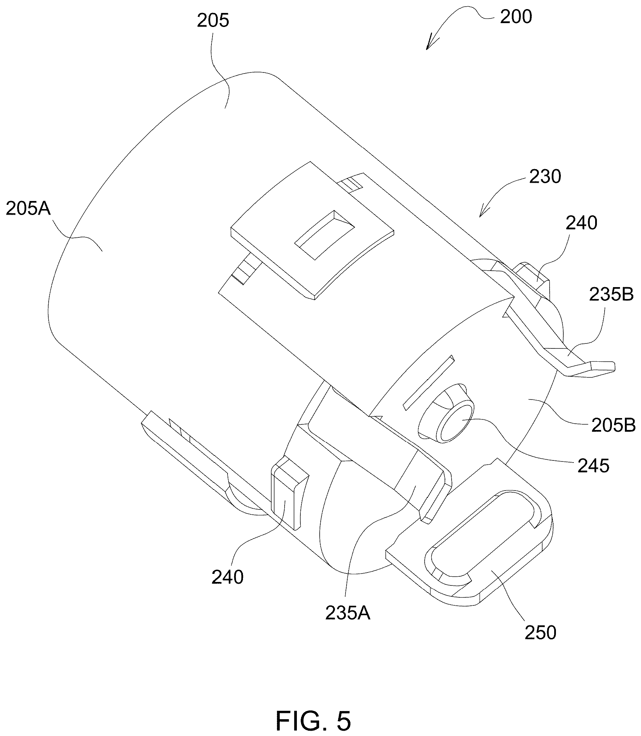

Turning now to FIGS. 4 and 5, the light module 200 is a self-contained lighting unit configured to couple to a power source, such as the battery pack 100, and emit light to illuminate an area. In embodiments, where the portable device is a different type of device, the light module 200 may be replaced with a different suitable module, such as a fan module, a laser module, a speaker module, a charging module, and the like. The illustrated light module 200 includes a light casing 205 having a first or front half 205A and a second or rear half 205B. The front half 205A and the rear half 205B of the casing 205 may be coupled together to surround a light space containing a light source 210, a collection assembly 215, and a control assembly 220. The casing 205 may be coupled together by resilient snap connections. In some embodiments, the resilient snap connections fix the first half 205A and the second half 205B of the casing 205 to contain the light module 200. As such, the entire light module may be a replaceable component. In other embodiments, the resilient snap connections may be configured to be easily disassembled to allow a user access to the internal lighting components. In still other embodiments, the front half 205A and the rear half 205B may be coupled together using other mechanisms (e.g., fasteners, adhesives, welding, etc.).

With reference to FIG. 4, the light source 210 is positioned within the casing 205. In the illustrated embodiment, the light source 210 is an LED light source. In other embodiments, the light source 210 may include multiple LEDs or may include other types of light sources. The collection assembly 215 is supported by the casing adjacent the light source 210 to create a desired light beam shape using the light emitted from the light source 210. In some embodiments, the collection assembly 215 may include reflectors, lenses, focusing elements, etc. that work to create the light distribution emitted through the front of the casing 205. The collection assembly 215 is positioned in the front half 205A of the casing 205 and channels light from the light source 210 out of the casing 205 and out of the light module 200.

The light source 210 is coupled to the control assembly 220. In some embodiments, the control assembly 220 and the light source 210 are positioned on circuit boards disposed within the casing 205. The light module 200 includes a switch actuator 225 for communicating with the control assembly 220 to control the light source 210. In the illustrated embodiment, the light module 200 includes one switch actuator 225. In other embodiments, the light module 200 may include multiple actuators associated with different control functions. In the illustrated embodiment, the switch actuator 225 may be used to move the light source 210 between different light modes. For example, the switch actuator 225 may be pressed multiple times to adjust the flashlight 10 between OFF - HI - MED - LOW - FLASHING - RED modes. In other embodiments, the switch actuator 225 may adjust the flashlight 10 between fewer or more modes. In some embodiments, the control assembly 220 may monitor the length of time that the switch actuator 225 is depressed and control the light source 210 accordingly. In other embodiments, other methods may be used to allow the switch actuator 225 to control the light source 210.

With reference to FIG. 5, the light module 200 includes a power interface 230 configured to couple the control assembly 220 to a power source, such as the battery pack 100, and provide power to the light source 210. The power interface 230 includes a set of electrical contacts 235. In the illustrated embodiment, the set of electrical contacts 235 includes two contacts 235A, 235B. The electrical contacts 235 extend rearwardly from the casing 205 and couple to the control assembly 220 inside the casing 205. The electrical contacts 235 may be cantilevered tines and may be resiliently biased radially inward. The bias of the electrical contacts 235 aids in full electrical connection with the power source.

With continued reference to FIG. 5, the light module 200 includes alignment features including one or more side projections 240 and a locating projection 245 on the rear half 205B of the casing 205. In some embodiments, additional alignment features may be included. In the illustrated embodiment, the side projections 240 are separately formed and coupled to the casing 205 to extend past the side thereof. In some embodiments, the side projections 240 may be integrally formed in the rear half 205B of the casing 205. The side projections 240 are generally rectangular projections. In other embodiments, the side projections 240 may have different shapes or locations. The side projections 240 may help align the light module 200 within the flexible housing 50. The locating projection 245 extends rearwardly from a rear face of the casing 205. The illustrated locating projection 245 is located on a central portion of the rear face of the casing 205, but offset from a center of the rear face. In the illustrated embodiment, the locating projection 245 is a separately formed component that extends through an opening in the casing 205. The locating projection 245 may be coupled to the control assembly 220 as an electronic switch configured to indicate full connection with the battery pack 100. The locating projection 245 may facilitate electrical connection of the light module 200 and the battery pack 100. In other embodiments, the locating projection 245 may be integrally formed with the casing 205. In addition to the alignment features, in the illustrated embodiment, the light module 200 includes a shield or cover 250 extending rearwardly from an edge of the rear half 205B of the casing 205. The shield 250 may be cantilevered and may be at least partially resilient.

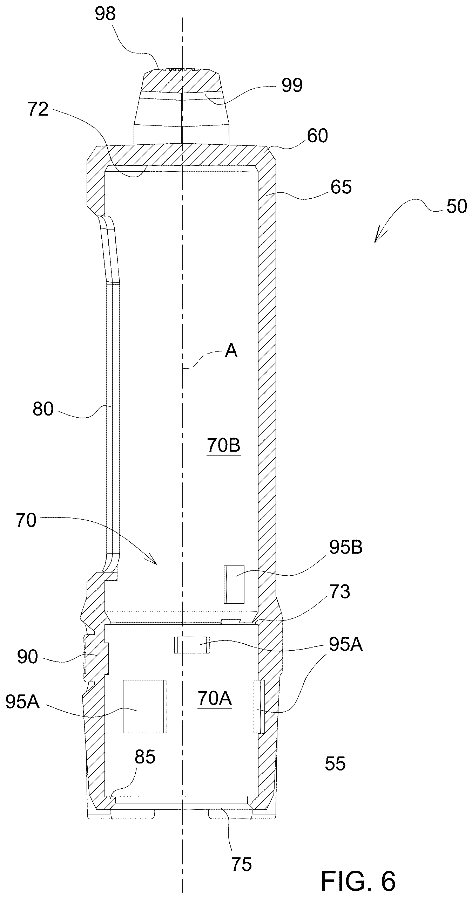

Turning now to FIG. 6, the flexible housing 50 is a flexible sleeve that extends along the longitudinal axis A between a front end 55 and a rear end 60. The flexible housing 5 may also be considered part of a case of the portable device that receives and holds the other components of the portable device. The front end 55 may also be referred to as a first end. The rear end 60 may also be referred to as a second end. A generally cylindrical surface 65 extends between the front end 55 and the rear end 60 and acts as a handle configured to be grasped by a user to allow the user to support the flashlight 10 and direct the light emitted from the flashlight 10. The flexible housing 50 is formed from a flexible and elastic material. In the illustrated embodiment, the flexible housing 50 is made with rubber or thermoplastic elastomer (TPE). In other embodiments, other materials with sufficient flexibility and elasticity may be used. The flexible housing 50 is designed to be able to stretch and return to its initial position.

As seen in FIG. 6, the flexible housing 50 is generally tubular and surrounds an interior space 70. The interior space 70 includes a first space 70A adjacent the front end 55 and a second space 70B adjacent the rear end 60. The first space 70A and the second space 70B are in communication with each other. The first space 70A and the second space 70B are divided by a circumferential rib 73 on the inside of the flexible housing 50. The first space 70A may also be referred to as a light module receiving space. The second space 70B may also be referred to as a battery receiving space. The interior space 70 is accessible through a front opening 75, adjacent the front end 55, and a side window 80 positioned between the front end 55 and the rear end 60. The front opening 75, also referred to herein as the first opening, allows access to the first space 70A and provides access along a direction generally parallel to the longitudinal axis A. The side window 80, also referred to herein as the second opening, allows access to the second space 70B and provides access along a direction that is transverse to the longitudinal axis A. The flexible housing 50 includes a front rim 85 adjacent the front opening 75. The flexible housing 50 includes a button mold 90 configured to be pressed by the user. The flexible housing 50 further includes alignment features including recesses 95A in the first space 70A, and recesses 95B in the second space 70B. The flexible material of the flexible housing 50 creates a shock-proof housing that protects the light module 200 and the battery pack 100 in the event of a drop or other impact. In some embodiments, the flexible housing 50 may include bumpers at the front end to increase the drop protection for the light module 200 in the first space 70A.

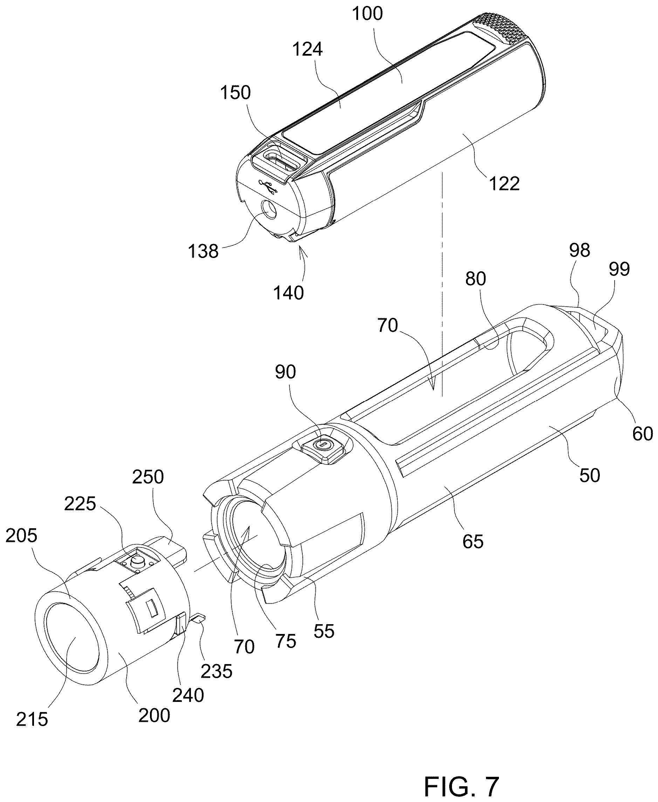

As seen best in FIGS. 1 and 7, the flexible housing 50 further includes a loop 98 coupled to the rear end 60. In the illustrated embodiment, the loop 98 is generally D-shaped and surrounds a receiving area 99. In the illustrated embodiment, the loop 98 is integrally formed with the flexible housing 50 and is shaped to extend from opposite edges of the housing and cross the rear end 60. In some embodiments, the loop 98 may be positioned toward a side of the rear end 60. In some embodiments, the loop 98 may be a separate component that is attached to the flexible housing 50 in other ways. In either case, the loop 98 is coupled to the rear end 60 and is able to apply a force to the rear end 60 to stretch the flexible housing 50.

With reference to FIG. 7, to assemble the flashlight 10, the battery pack 100 and the light module 200 are positioned in the interior space 70 defined by the flexible housing 50. The battery pack 100 and the light module 200 may be positioned in the flexible housing 50 in any order (e.g., the battery pack 100 first or the light module 200 first). In one assembly method, the light module 200 may be assembled and inserted through the side window 80 and positioned in the first space 70A of the interior space 70. The side window 80 may deform and expand (e.g., lengthen or widen) to allow the light module 200 to pass through the side window 80 and into the second space 70B of the interior space 70. In some embodiments, the loop 98 is engaged by the user to anchor the flexible housing 50 and force is applied to the light module 200 to overcome the bias and stretch the flexible housing 50. The light module 200 is then moved forward, and the flexible housing is stretched radially outwardly by the light module 200 so that the light module 200 may move past the rib 73 dividing the first space 70A and second space 70B. As the light module 200 moves into the first space 70A, the light module 200 may be rotated about the axis A as needed to align the projections 240 with the recesses 95A and any other alignment features as needed. Once the rear half 205B of the casing of the light module 200 passes the rib 73 and the front half 205B of the casing is adjacent the front rim 85, the flexible housing 50 is biased to return toward the initial position and applies a retaining force to the light module 200.

In another assembly method, the light module 200 may be assembled and inserted through the front opening 75 and positioned in the first space 70A of the interior space 70. The flexible housing 50 may be stretched to expand (e.g., widen) the front opening 75 and allow the light module 200 to be inserted through the front opening 75 into the interior space 70. Once the light module 200 is positioned in the first space 70A, the flexible housing 50 is biased towards the initial position and applies a retaining force on the light module 200.

The light module 200 is positioned within the first space 70A so that the side projections 240 are aligned with and received by the recesses 95A of the housing. The casing 205 is positioned between the front rim 85 and the circumferential rib 73 which apply a retaining force that inhibits axial movement of the light module 200 within the interior space 70. When the light module 200 is aligned in the housing 50, the switch actuator 225 directly underlies the button mold 90 so that the user may press down on the button mold 90 to actuate the switch actuator 225.

In one assembly method, the battery pack 100 may be inserted through the side window 80 and positioned in the second space 70B of the interior space 70. The first end face 115 of the battery pack 100 may be inserted through the side window 80 and positioned adjacent the rib 73. The user may then engage the loop 98 by positioning a finger in the receiving area 99. The user pulls the loop 98 in a direction along the axis away from the second end 60 to stretch the flexible housing 50 and expand the side window 80. The loop 98 may be pulled and the side window 80 expanded until the second end face 120 of the battery pack 100 fits through the side window 80. The loop 98 provides an easy way to stretch the side window 80 without having portions of the user's hand block the side window 80. Once the second end face 120 of the battery pack 100 fits through the side window 80, the loop 98 may be released and the resilient material of the flexible housing 50 is biased to return toward the initial position. As the flexible housing 50 retracts, the side window 80 narrows so the battery pack 100 no longer fits through the side window 80. The flexible housing 50 applies a retaining force to the battery pack 100 that retains or holds the battery pack 100 in the flexible housing 50 and biases the battery pack 100 into engagement with the light module 200, once inserted.

In another assembly method, the battery pack 100 may be inserted into the interior space 70 through the front opening 75. The flexible housing 50 may be stretched to expand (e.g., widen) the front opening 75 to receive the battery pack 100, and the battery pack 100 may be moved through the first space 70A to the second space 70B of the interior space 70.

Once positioned in the second space 70B, the housing 105 of the battery pack 100 is positioned between the circumferential rib 73 and a rear wall 72 (FIG. 6) of the interior space 70, which apply a retaining force that inhibits axial movement of the battery pack 100 within the interior space 70. The battery pack 100 is positioned in the flexible housing 50 so that at least a portion of the flat surface 124 is visible and accessible through the side window 80 including when the flashlight 10 is fully assembled and operated. In some embodiments, alignment features of the battery pack 100 may engage alignment features in the interior space 70 of the flexible housing 50 to ensure the battery pack 100 is correctly positioned with the flat surface 124 adjacent the side window 80. In some embodiments, the flat surface 124 acts as a visual indicator of alignment of the battery pack. The flat surface 124 may include indicia visible through the side window 80. The indicia may include a brand or product name, promotional information, battery specifications, or other information. In the illustrated embodiment, the second space 70B of the interior space 70 of the flexible housing 50 is generally shaped to correspond to the shape of the battery pack 100. In some embodiments, the second space 70B may be shaped to accommodate various battery packs of different shapes. In some embodiments, the second space 70B may be shaped differently to accommodate a battery pack having a different shape. For example, in one embodiment, the battery may be generally rectangular and include multiple planar surfaces rather than having a cylindrical surface. The second space 70B may have corresponding shape to align the rectangular battery in the interior space 70.

When the light module 200 and battery pack 100 are received in the interior space 70, the flexible housing 50 supports the light module 200 and the battery pack 100 in electrical communication with each other. The battery pack 100 is positioned with the first end face 115 adjacent the circumferential rib 73 so that the first interface 140 is adjacent the light module 200. The light module 200 is aligned to the flexible housing 50 so that the electrical contacts 235 extend past the circumferential rib 73 into the second space 70B. In some embodiments, the recesses 95B provide clearance between the electrical contacts 235 and the flexible housing 50. The electrical contacts 235 engage the first interface 140 to electrically connect the battery pack 100 to the light module 200. In the illustrated embodiment, the electrical contacts 235 are biased into engagement with the terminals 140A, 140C. When the light module 200 and the battery pack 100 are received and supported by the flexible housing 50, the locating projection 245 on the casing 205 of the light module 200 engages the first indentation 138 on the first end face 115 of the battery pack 100. In the illustrated embodiment, when the light module 200 and the battery pack 100 are received and supported by the flexible housing 50, the shield 250 is positioned adjacent the second interface 145. The shield 250 may selectively cover the second interface 145 to help protect the second interface 145. Because the shield 250 is cantilevered, the shield 250 may also be temporarily moved (e.g., bent or pivoted) away from the second interface 145 to provide access to the second interface 145 for, for example, a USB cable. Alternatively, the shield 250 may be rigid and stationary to inhibit access to the second interface 145. The shield 250 may also act as an additional alignment feature and provide a counter force to the bias of the electrical contacts 235. Therefore, the flexible housing 50 supports and aligns the light module 200 and the battery pack 100 for electrical communication. The flexible housing 50 also biases or forces the lighting module 200 and the battery pack 100 into engagement with each other.

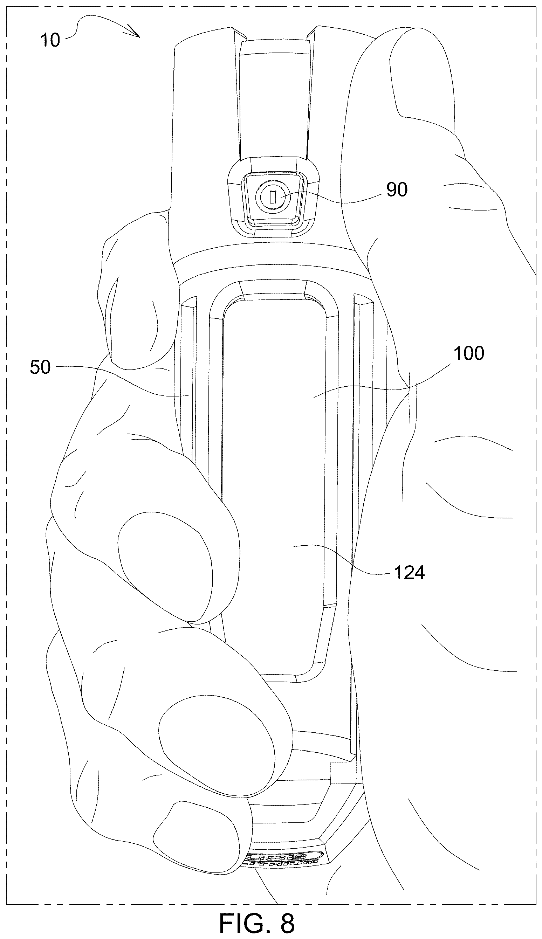

With reference to FIG. 8, in operation, the flashlight 10 may be gripped by a user and directed toward an area of interest. The user may press down on the button mold 90 to activate the switch actuator 225. During operation, the light module 200 is visible and accessible through the front opening 75 to emit light therethrough. During operation, the second surface 124 of the battery pack 100 is visible and accessible. If the battery pack 100 becomes depleted, damaged, or otherwise unusable, the battery pack 100 may be removed through the side window 80 and recharged or replaced with a new battery without having to disassemble the light module 200 or any other portions of the flexible housing 50. In other words, the battery pack 100 may be removed from the side window 80 independently of the light module 200. Additionally, the light module 200 may be removed from the front opening 75 independently of the battery pack 100.

The flashlight 10 is advantageously lightweight and portable. Additionally, the flexible sleeve design of the flashlight 10 requires fewer individual components than traditional flashlights with rigid housings, thereby decreasing assembly cost and increasing user friendliness.

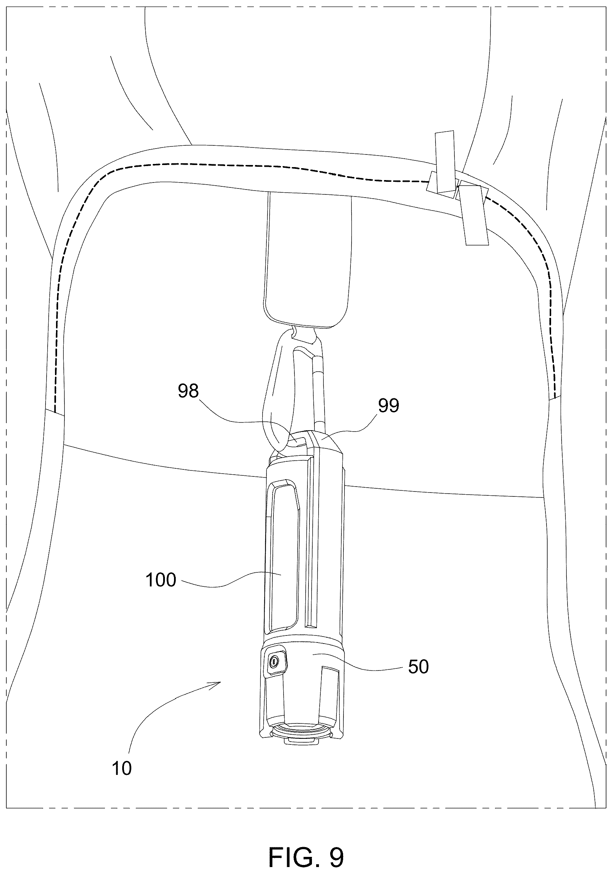

As seen in FIG. 9, in some embodiments, the loop 98 is configured to couple the flashlight 10 to a bag, case, belt loop, or any other support item to allow easy access by a user. The receiving area 99 of the loop 98 may receive a portion of a jump ring, a snap ring, a carabiner, a keychain, or other fastening device to secure the flashlight 10. In the illustrated embodiment, a carabiner is positioned through the receiving area 99 of the loop 98 and is used to couple the flashlight 10 to a backpack. The loop 98 allows the user to easily transport the flashlight 10 and keep the flashlight 10 handy in case it is needed under short notice.

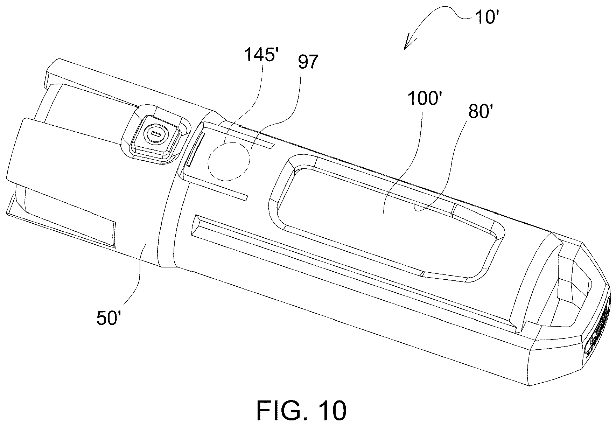

With reference to FIG. 10, an alternate lighting device 10' is illustrated, also referred to herein as flashlight 10'. The flashlight 10' is similar to the flashlight 10 shown in FIGS. 1-9 and only differences are described herein. The flashlight 10' includes a flexible housing 50' that includes a side window 80' and a port 97 adjacent the side window 80'. The port 97 is a flap formed in the flexible sleeve that can be pulled back to allow selective access to the interior space (not labeled herein). The second interface 145' of the battery pack 100' is positioned adjacent the port 97 such that the user can access the second interface 145' and charge the battery pack 100' without removing the battery pack 100' from the flexible housing 50'. For example, a user may couple the battery pack 100' to a power supply (e.g., a wall outlet, another battery pack, etc.) via the second interface 145' and a charging cable (e.g., a USB cable). In other words, the second interface 145' is couplable to a power supply. In some embodiments, the battery pack 100 may be non-removable and may be recharged while in the housing 50' through the port 97. In some embodiments, instead of a separate port 97, the side window 80' may extend closer to the front of the flashlight 10' and the second interface 145' may be accessible through the side window 80'. In some embodiments, the flashlight 10' may include only the port 97 and the side window 80 may be removed. In still further embodiments, the flashlight 10' may include neither the port 97 nor the side window 80, and the front opening 75 may be the only opening.

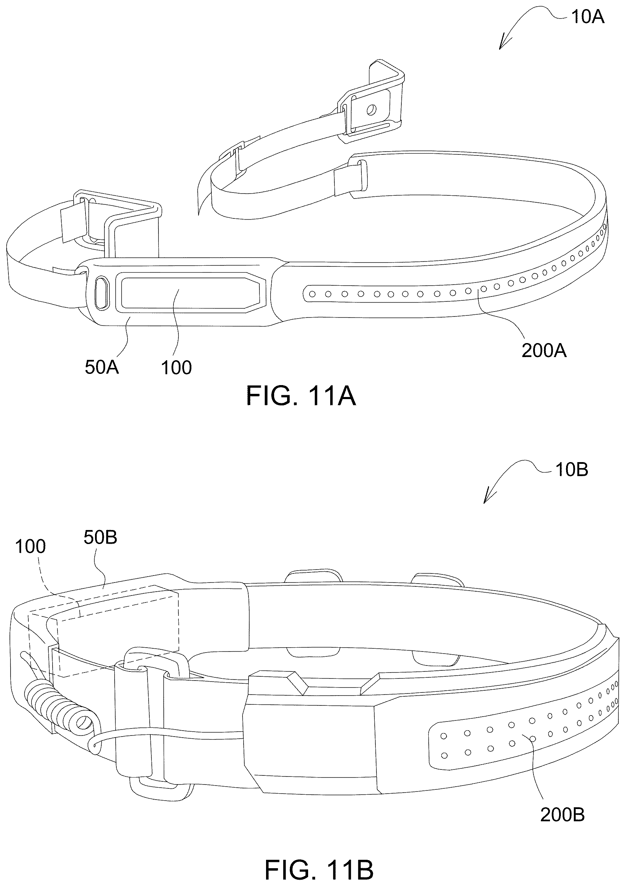

Turning now to FIGS. 11A-11F, in other embodiments, the flexible housing 50 may be usable on other types of lighting devices 10 or battery powered devices 10. In such embodiments, the flexible housing 50 may define an interior space that receives the battery pack 100 and a power interface of a battery powered device 200A-F. The power interface is configured to engage the battery interface 140 of the battery pack 100. The flexible housing 50 biases the battery pack 100 into engagement with the power interface of the battery powered device 200A-F.

For example, in the embodiment shown in FIG. 11A, a lighting device such as an elastic band light 10A includes a flexible housing 50A that receives the battery pack 100 and biases the battery pack 100 into engagement with a power interface of a lighting module 200A including a strip of LEDs. The power interface may include electrical leads or contacts and electrically connects the battery pack 100 to the LEDs to illuminate an area around the band light 10A and increase visibility of the wearer.

As seen in FIG. 11B, a lighting device such as a headlamp 10B includes a flexible housing 50B that receives the battery pack 100 and biases the battery pack 100 into connection with a power interface of a lighting module 200B including multiple strips of LEDs configured to illuminate an area in front of the headlamp 10B. The battery pack 100 provides power to the LEDs.

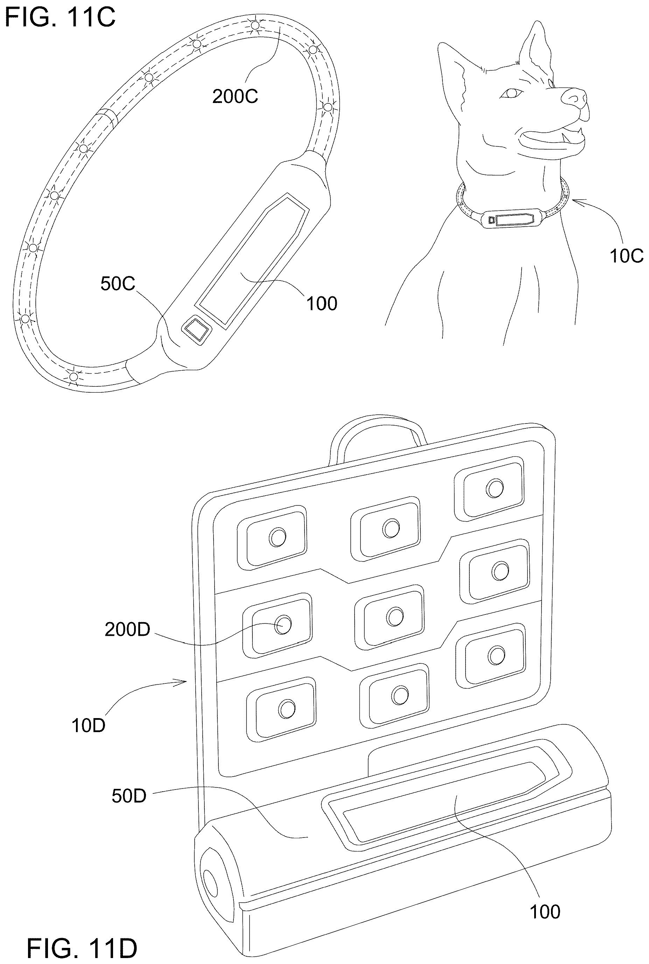

As seen in FIG. 11C, in some embodiments, a pet collar 10C includes a flexible housing 50C that receives the battery pack 100 and biases the battery pack 100 into engagement with a ringed light module 200C to power the lights and increase visibility of the wearer of the collar 10D.

As seen in FIG. 11D, in some embodiments, a panel light 10D includes a flexible housing 50D that receives the battery pack 100 and biases the battery pack 100 into engagement with the power interface of an array of LEDs 200D to provide power to the LEDs and illuminate a work area around the panel light 10D.

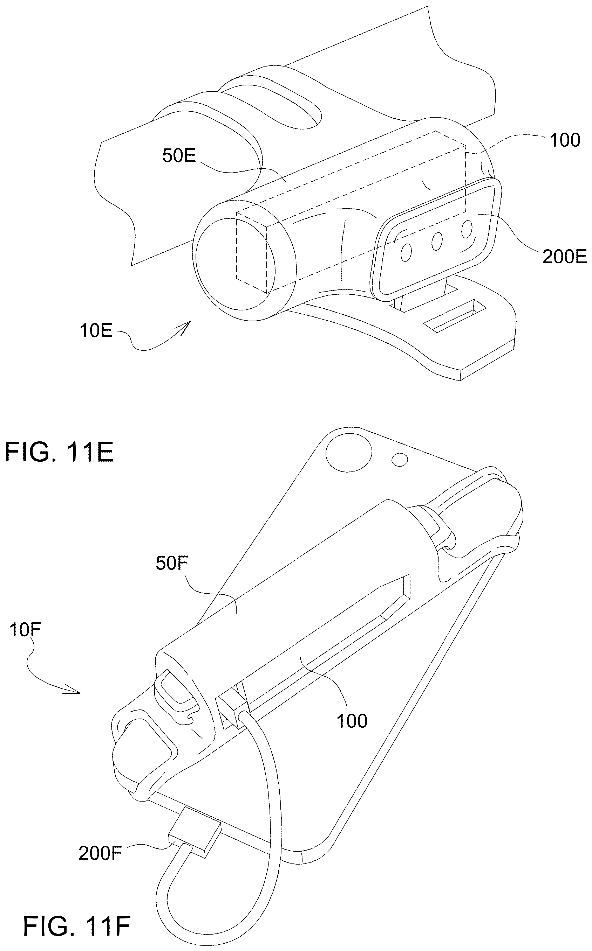

As seen in FIG. 11E, in some embodiments, a bicycle light 10E includes a flexible housing 50E configured to receive the battery pack 100 and bias the battery pack 100 into engagement with a power interface of a light module 200E to power a light source and illuminate an area in front of a bike.

As seen in FIG. 11F, a battery charger 10F includes a flexible housing 50F that receives the battery pack 100 and engages an electronic device (e.g., a mobile phone) to support the battery pack 100 adjacent the electronic device. The electronic device may be electrically coupled to the battery pack 100 using the second interface 145 (FIG. 3) of the battery pack 100. In other embodiments, the battery charger 10F may include an adapter received in the interior space of the flexible housing 50 and including a power interface biased by the flexible housing 50 into engagement with the battery pack 100 to provide power to an output cord 200F and attached device. These exemplary embodiments illustrate the usefulness of a flexible housing that removably supports a battery pack 100 and biases the battery pack 100 into electrical engagement with the battery powered device. Other variations of the battery powered devices and the flexible housing that are not discussed herein are also included in the scope of the disclosure.

Thus, embodiments described herein provide, among other things, a portable device with a flexible housing containing a battery pack and a device module, such as a light module. Embodiments described herein also provide, among other things, a battery powered device with a flexible housing configured to bias a battery pack into electrical connection with a device. Various features and advantages are set forth in the following claims.

## Claims

1. A lighting device comprising:
a housing formed from a flexible material and extending along a longitudinal axis between a front end and a rear end, the housing including
an interior space extending along the longitudinal axis,
a front opening positioned adjacent the front end and providing access to the interior space, and
a side opening positioned between the front end and the rear end and providing access to the interior space;
a light module disposed within the housing adjacent the front end such that a light source of the light module is configured to emit light through the front opening; and
a battery pack disposed within the housing and removably coupled to the light module to provide power to the light source, the battery pack including a surface that is visible through the side opening during operation of the lighting device.

2. The lighting device of claim 1, wherein the battery pack includes a first end including an interface for providing power to the light module and a second end opposite the first end, and wherein the surface extends between the first end and the second end.

3. The lighting device of claim 2, wherein the interface is a first interface, wherein the battery pack further includes a second interface, and wherein the second interface is positioned adjacent the surface at the first end of the battery pack, wherein the second interface is preferably accessible while the battery pack is positioned within the interior space, and wherein the second interface is couplable to a power supply to recharge the battery pack, and/or:
the housing includes a port opening adjacent the side opening that selectively provides access to the interior space, and wherein the battery pack is supported in the housing with the second interface adjacent the port opening.

4. The lighting device of any one of claims 1 to 3, wherein the surface extends along the longitudinal axis.

5. The lighting device of any one of claims 1 to 4, wherein the light module includes one or more electrical contacts, and wherein the housing supports the light module adjacent the battery pack such that the one or more electrical contacts engage an interface of the battery pack, the interface including one or more terminals.

6. The lighting device of any one of claims 1 to 5, wherein the battery pack is removable from the housing through the side opening and independently of the light module.

7. The lighting device of any one of claims 1 to 6, wherein the light module is removable from the housing independently from the battery pack.

8. The lighting device of any one of claims 1 to 7, wherein the light module includes a locating feature, wherein the battery pack includes an alignment feature, and wherein the alignment feature engages the locating feature to facilitate electrical connection of the light module to the battery pack.

9. A lighting device comprising:
a housing formed from a flexible material, the housing including an interior space and an opening providing access to the interior space;
a light module at least partially received by the housing and including a power interface and a light source configured to emit light, the light source electrically connected to the power interface; and
a battery pack received within the interior space of the housing adjacent the opening, the battery pack including a battery interface;
wherein the housing applies a retaining force that biases the battery pack into engagement with the light module such that the battery interface is electrically connected to the power interface and the battery pack provides power to the light source.

10. The lighting device of claim 9, wherein the housing includes a loop configured to be engaged by a user to stretch the housing.

11. The lighting device of either claim 9 or 10, wherein the battery pack includes a charging port, and wherein the charging port is accessible through the housing when the battery pack is disposed within the interior space of the housing.

12. The lighting device of claim 11, wherein the opening is a side opening positioned between a first end and a second end of the housing, and wherein the charging port is accessible through the side opening, wherein preferably the battery pack is removable from the housing through the side opening and/or:
the housing includes a port opening positioned between a first end and a second end of the housing, wherein the port opening includes a flap that provides selective access to the interior space, and wherein the charging port is accessible through the port opening.

13. The lighting device of any one of claims 9 to 12, wherein the light module and the battery pack are removable from the housing independent of each other.

14. A case for a battery powered device, the case comprising:
a housing formed from a flexible material and biased to return to an initial position;
an interior space defined within the housing, the interior space configured to at least partially receive a device module of the battery powered device, the interior space further configured to receive a battery pack with a battery interface;
an opening providing access to the interior space;
wherein the housing is configured to stretch to expand the opening and allow the battery pack to be positioned in the interior space; and
wherein a bias of the housing returning to the initial position applies a retaining force configured to hold the battery pack in the interior space and electrically couple the battery interface with the power interface to provide power from the battery pack to the device module.

15. The case of claim 14, further comprising a loop configured to be engaged by a user to stretch the housing against the bias, wherein the housing preferably includes a first end having an opening and a second end opposite the first end, wherein the interior space is configured to receive the device module at the first end adjacent the opening, and wherein the loop is coupled to the second end.
